**Europäisches Patentamt**

**European Patent Office**

**Office européen des brevets**

(19)

(11) Veröffentlichungsnummer: **0 232 449**

**A2**

(12) # EUROPÄISCHE PATENTANMELDUNG

(21) Anmeldenummer: **86105576.2**

(22) Anmeldetag: **22.04.86**

(51) Int. Cl.4: **F42B 15/033**

Die Bezeichnung der Erfindung wurde geändert (Richtlinien für die Prüfung im EPA, A-III, 7.3).

(30) Priorität: **31.08.85 DE 3531189**

(43) Veröffentlichungstag der Anmeldung: **19.08.87 Patentblatt  87/34**

(84) Benannte Vertragsstaaten:
**DE FR GB IT**

(71) Anmelder: **Rheinmetall GmbH
Ulmenstrasse 125 Postfach 6609
D-4000 Düsseldorf(DE)**

(72) Erfinder: **Unterstein, Klaus
Ziegelstrasse 30
D-4000 Düsseldorf(DE)**
Erfinder: **Büchele-Buecher, Sigfrid
Mönkesweg 53
D-4005 Meerbusch-Strümp(DE)**

(54) **Überdruckventil.**

(57) Eine als Überdruckventil eines Heißgasgenerators verwendete Ventilanordnung 10 soll einer hohen Temperaturbeanspruchung und einem verschleißfördernden Gasstrom betriebssicher standhalten, wobei gleichzeitig der Nenndruck,für den die Ventilanordnung ausgelegt ist, präzise eingehalten werden muß.

Zu diesem Zweck ist der den Ventilsitz 13 beaufschlagende Kolben 12 als im wesentlichen langgestrecktes zylindrisches Gebilde mit halbkugelförmigen Endstücken ausgebildet, das von einer zwischen Aufnahmen 17, 18 gehaltenen Druckfeder 16 beaufschlagt wird, die aus Richtung der Brennkammer 101 gesehen in Längsaxialrichtung hinter den Kolben 12 angeordnet ist. In einem bevorzugten Ausführungsbeispiel der Erfindung besteht der Ventilkörper 11,in dem der Kolben 12 gleitbar gelagert ist, aus einer Hochtemperaturmolybdänlegierung, während der Kolben 12 selbst, der Sitz 13 und gegebenenfalls die Aufnahmen 17, 18 für die Druckfeder 16 aus einem Material geringer Wärmeleitfähigkeit, vorzugsweise Siliziumnitrit hergestellt sind.

FIG. 1

## Ventilanordnung

Die Erfindung betrifft eine Ventilanordnung nach dem Oberbegriff des Patentanspruchs 1.

Eine Ventilanordnung der gattungsgemäßen Art wird als Überdruckventil bei einem Heißgasgenerator verwendet, der in einer Brennkammer aus einer Treibladung ein hochgespanntes Gas erzeugt, das in der Außenwandung eines Flugkörpers angeordneten Düsen zugeführt wird. Dadurch soll ein die Flugbahn des Flugkörpers korrigierender Schub erzeugt werden. Die von einem solchen Heißgasgenerator erzeugten Gase haben eine sehr hohe Temperatur in der Größenordnung zwischen 1400 K und 2000 K und strömen mit sehr großer Geschwindigkeit durch die Ventilanordnung, wenn diese zum Abbau einer Überdruckspitze in der Brennkammer als Überdruckventil wirkend geöffnet ist. Durch die hohen Gastemperaturen und Gasgeschwindigkeiten wurden bei bekannten Ventilanordnungen beträchtliche Abnutzungserscheinungen in Form von Auswaschungen und Abbränden der dem Gasstrom ausgesetzen Ventilteile beobachtet, die eine betriebssichere Funktion einer derartigen Ventileinrichtung über einen längeren Zeitraum nicht gestatteten. Weiter wurde eine unzulässige Wärmeübertragung auf das Federelement der bekannten Ventileinrichtung beobachtet, die eine Veränderung der Federeigenschaften des Federelementes bewirkte, und damit die Einhaltung eines vorbestimmten Solldrucks in der Brennkammer nicht zuließ.

Der Erfindung liegt die Aufgabe zugrunde, eine verbesserte Ventilanordnung anzugeben, die die zuvor beschriebenen Nachteile nicht aufweist, die also verschleißsicher und temperaturbeständig ist und demzufolge eine betriebssichere Funktion der Ventilanordnung über einen längeren Zeitraum ermöglicht. Diese Aufgabe wird ausgehend von einer Ventilanordnung der eingangs näher bezeichneten Art durch die im kennzeichnenden Teil des Patentanspruchs 1 angegebenen Merkmale gelöst.

Vorteilhafte Ausgestaltungen und Weiterbildungen der Ventilanordnung gehen aus den Unteransprüchen hervor.

Die Erfindung wird nachfolgend unter Bezug auf die Zeichnung näher erläutert. Dabei zeigt:

Figur 1: eine erste Ventilanordnung im Längsschnitt;

Figur 2: ein weiteres Ausführungsbeispiel der Erfindung.

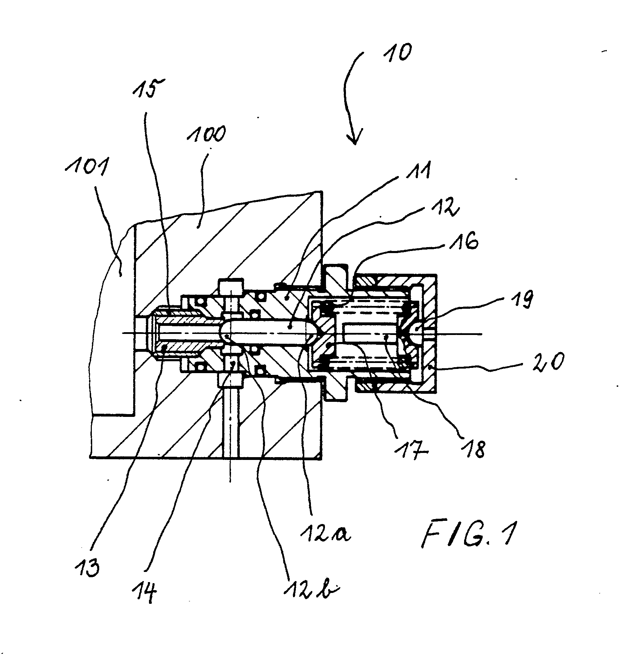

In den Figuren sind lediglich die zum Verständnis der Erfindung wesentlichen Teile dargestellt. Diese sind Bestandteil eines Heißgasgenerators, der wiederrum innerhalb eines endphasengelenkten Flugkörpers odr Geschosses angeordnet ist. Figur 1 zeigt, lediglich teilweise dargestellt, das Gehäuse 100 eines Heißgasgenerators, das eine Brennkammer 101 umschließt. In der Brennkammer 101 wird aus einer nicht dargestellten pyrotechnischen Treibladung ein Gas erzeugt, dessen Temperatur zwischen etwa 1400 K und 2000 K liegt. Dieses hoch erhitzte Gas wird nicht dargestellten Steuerdüsen zugeführt, die auf dem Umfang des Flugkörpers angeordnet sind, und die bei Beaufschlagung mit dem vom Heißgasgenerator erzeugten Gas einen für Steuerzwecke ausnutzbaren Impuls auf den Flugkörper ausüben. Um ein gleichmäßiges Druckniveau in der Brennkammer 101 aufrechtzuerhalten, das für eine optimale Verbrennung der Treibladung und Beaufschlagung der Steuerdüsen erforderlich ist, wird in einer Bohrung des Gehäuses 100 eine Ventilan ordnung 10 vorgesehen, die als Überdruckventil wirkt und einen Solldruck übersteigende Druckspitzen innerhalb der Brennkammer 101 abbaut. Zu diesem Zweck verfügt die Ventilanordnung 10, im Ventilkörper 11 in Längsaxialrichtung beweglich gelagert, über einen Kolben 12, der von einer Druckfeder 16 im Schließungssinne beaufschlagt ist. Bei Auftreten einer Druckspitze innerhalb der Brennkammer 101 hebt der Kolben 12 sich von seinem Sitz 13 ab und stellt eine gasdurchlässige Verbindung zwischen dem Innern der Brennkammer 101 und der Öffnung 14 her. Der Druckwert, bei dem die Ventilanordnung 10 anspricht, wird im wesentlichen durch die Charakteristik der Druckfeder bestimmt. Diese ist in unerwünschter Weise durch hohe Temperaturen beeinflußbar. Um eine nachteilige thermische Beeinflussung möglichst gering zu halten, ist der Kolben 12 als langgestrecktes, im wesentlichen zylindrisches Gebilde von möglichst geringem Querschnitt ausgestaltet, dessen Endstücke 12 a und 12 b halbkugelförmig abgerundet sind. Das der Brennkammer 101 zugewandte Endstück liegt im Ruhezustand der Ventilanordnung 10 auf dem Sitz 13 auf und schließt damit die Öffnung 14 gegen die Brennkammer 101 hin ab. Die den Kolben 12 beaufschlagende Druckfeder 16 ist in Längsachsenrichtung von der Brennkammer 101 aus gesehen hinter dem Kolben 12 angeordnet, um möglichst weit von der Wärmequelle entfernt zu sein. Die Druckfeder 16 ist zwischen zwei Aufnahmen 17, 18 eingeschlossen. Während die Aufnahme 17 vom Endstück 12 a des Kolbens 12 beaufschlagt wird und dazu über eine in ihrer Außenfläche zentrisch angeordnete Ausnehmung zum Eingriff des Kolbens 12 verfügt, stützt sich die zweite Aufnahme 18 auf einer Halbkugel 19 ab, die in einer mit dem Ventilkörper 11 verschraubten Überwurfmutter 20 angeordnet ist. Durch Verdrehen der Überwurfmutter 20 läßt sich die Vorspannung der Druckfeder 16 auf einfache Weise justieren. Im Ausführungsbeispiel nach Figur 1 besteht der Ventilsitz 13 aus einem im wesentlichen hohlzylindrischen Einsatz, der von einem Dichtring 15 mantelförmig umgeben ist. Dieser Dichtring 15 verhindert das Eindringen heißer Gase aus der Brennkammer 101 über die Außenmantelflächen der Ventilanordnung 10.

Um den hohen Temperaturbelastungen betriebssicher standzuhalten, ist auch besonderes Augenmerk auf die Materialauswahl für die verschiedenen Komponenten der Ventilanordnung 10 zu richten. In einem vorteilhaften Ausführungsbeispiel der Erfindung besteht der Ventilkörper 11 aus einer Hochtemperaturmolybdänlegierung. Als besonders geeignet hat sich dabei die Legierung erwiesen. Der für die Schließ-/Öffnungsfunktion der Ventilanordnung 10 zuständige Kolben 12 selbst besteht ebenfalls wie die Ventilsitze 13, 23 vorzugsweise aus Silitiumnitrit, das eine hinreichend hohe Temperaturbeständigkeit und eine ganz hervorragende Beständigkeit gegen das mit Abrandpartikeln verunreinigte Heißgas aufweist. Zweckmäßig werden auch die Aufnahmen 17, 18 für die Druckfeder 16 und die zur Lagerung der Aufnahme 18 bestimmte Halbkugel 19 ebenfalls aus einem Werkstoff mit geringer Wärmeleitfähigkeit wie beispielsweise Siliziumnitrit hergestellt.

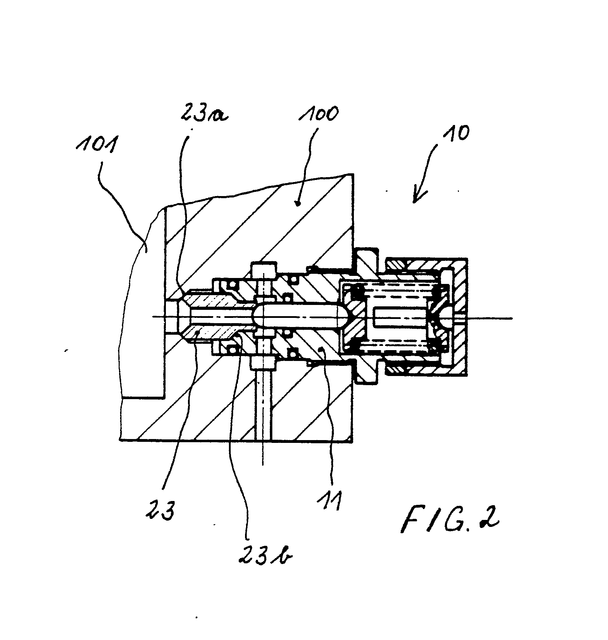

Zwecks noch höherer Temperaturbeständigkeit ist im Ausführungsbeispiel gemäß Figur 2 der Ventilsitz 23 derart ausgestaltet, daß auf den im Ausführungsbeispiel nach Figur 1 vorgesehenen Dichtring 15 verzichtet werden kann. Der Ventilsitz 23 hat dazu eine im wesentlichen flaschenförmige Gestalt, wobei sein Bereich größeren Durchmessers von im Bezug zur Längsachse schräg angestellten Endflächen 23 a, 23 b berandet ist. Die Fläche 23 b ist formschlüssig und gasdichtend an eine entsprechend ausgestaltete Gegenfläche im Ventilkörper 11 angepaßt. Auch in der die Ventilanordnung 10 aufnehmenden Bohrung innerhalb des Gehäuses 100 ist eine schräg verlaufende Fläche vorgesehen, an die sich beim Einschrauben des Ventilkörpers 11 die Fläche 23 a des Ventilsitzes 23 gasabdichtend anlegt.

## Ansprüche

1. Ventilanordnung mit einem in einem Ventilkörper gleitbar gelagerten, von einer Druckfeder beaufschlagten, in Ruhelage auf einem Sitz aufliegenden Kolben, zur Verwendung als Überdruckventil in einem eine Brennkammer aufweisenden Heißgasgenerator, **dadurch gekennzeichnet,** daß der Kolben (12) im wesentlichen zylindrisch ausgebildet ist mit halbkugelförmig ausgestalteten Endstücken (12 a, 12 b), und daß die den Kolben (12) beaufschlagende Druckfeder (12) von der Brennkammer (101) aus gesehen in Längsachsenrichtung hinter dem Kolben (12) angeordnet ist, wobei sie von zwei Aufnahmen (17, 18) eingeschlossen ist, die sich einerseits am Endstück (12 a) des Kolbens (12), andererseits am Ventilkörper (11) abstützen.

2. Ventilkörper nach Anspruch 1, **dadurch gekennzeichnet,** daß zur Abstützung der Aufnahme (18) eine Halbkugel (19) vorgesehen ist, die auf der inneren Stirnfläche einer mit dem Ventilkörper (11) verschraubbaren Überwurfmutter (20) angeordnet ist.

3. Ventilanordnung nach einem der Ansprüche 1 und 2, **dadurch gekennzeichnet,** daß der Ventilsitz (13) im wesentlichen hohlzylindrisch ausgebildet ist und auf seiner Außenmantelfläche einen Dichtring (15) trägt.

4. Ventilanordnung nach einem der Ansprüche 1 und 2, **dadurch gekennzeichnet,** daß der Ventilsitz (23) im wesentlichen flaschenförmig ausgebildet ist und daß die dem Abschnitt größeren Durchmessers begrenzenden Stirnflächen mit entgegengesetzter Steigung konisch verlaufend ausgebildet sind.

5. Ventilanordnung nach einem der Ansprüche 1 bis 4, **dadurch gekennzeichnet,** daß der Ventilkörper (11) aus einer Hochtemperaturmolybdänlegierung, vorzugsweise aus besteht, und daß der Kolben (12), der Sitz (13, 23), sowie die Halbkugel (19) und gegebenenfalls auch die Aufnahmen (17, 18) aus einem Werkstoff mit geringer Wärmeleitfähigkeit, vorzugsweise aus Siliziumnitrit bestehen.

FIG.1

Rheinmetall GmbH

R 966

101 23a 100 10

23 11

23b FIG.2

R 966